# EUROPEAN PATENT APPLICATION

(11) **EP 3 906 806 A1**
(43) Date of publication of application: **10.11.2021**
(21) Application number: 20877803.5
(22) Date of filing: 05.06.2020
(51) Int. Cl.: A45C 5/04

(54) **STRUCTURE OF CASE BODY**

(30) Priority: 17.10.2019 CN 201910985807
(71) Applicant: San Shiang Technology Co., Ltd., Tainan City, Taiwan (TW)
(72) Inventor: LIN, Ming Yang, Tainan City, Taiwan (TW)
(74) Representative: Cabinet Chaillot
(86) International application number: PCT/CN2020/000131
(87) International publication number: WO 2021/072986

(57) **Abstract**

A box structure selects a material of PET fibers or PET fibers with PP fibers to prepare a non-woven fabric layer block which is processed by baking and cold molding to form a box. The box is formed by combining a left shell and a right shell which are manufactured separately, and then combined into a box with an accommodation space inside. The left shell is divided into a left top wall, a left sidewall and a left bottom wall which are continuously extended and molded. The right shell is divided into a right top wall, a right sidewall and a right bottom wall which are continuously extended and molded. The left and right top walls and the left and right bottom walls have a weight per unit area of 1200~2000g/m². The left and right sidewalls have a weight per unit area of 600~1200g/m².

## Description

### BACKGROUND OF THE INVENTION

### Field of the Invention

The present invention relates to a box structure, and more particularly to a box formed by preparing a non-woven fabric layer block with a fiber material and manufactured by the processes of baking and cold molding. This invention is characterized in that the weight per unit area and density of the top and bottom walls of the box are greater than those of the sidewalls of the box.

### Description of the Related Art

In this disclosure, the term "box" refers to an object having a shell body with an appropriate hardness and an accommodation space formed inside the box for containing other objects. In real life, a hard shell suitcase or a bicycle carrying compartment is an example of the box.

In general, a conventional box is composed of at least one set (such as two sets) of shell bodies, a zipper, a handle, and a set of (or four) rollers. The set of shell bodies generally includes two symmetrical concave shell bodies; the accommodation spaces inside the two shell bodies are configured to be opposite to each other in the assembling process; a part of an edge fringe of a side (such as the rear side) is pivotally connected to another part of the edge fringe, so that the two shell bodies preliminarily achieve the opening and closing effects; the zipper is connected to the remaining edge fringe, so that when the two shell bodies are engaged with each other, the zipper can be pulled up to seal the box; the handle is installed to a top surface of one of the shell bodies to facilitate lifting the whole box; the set of (or four) rollers are installed to the bottom surfaces of the two shell bodies respectively to facilitate users to pull or push the whole box. If the conventional box is assembled for its use as a suitcase, a pull rod that can be pulled and stretched is generally added and installed into one of the shell bodies to facilitate users to pull the pull rod and work with the rolling of the set of roller to achieve the effect of pulling and moving the whole box while the users are walking or moving. As to the conventional box structure, the shell body is undoubtedly the most important component of the box structure, and the shell body must have an appropriate hardness to separate the internal accommodation space, and the shell body must be tough enough to provide a good drop and impact resistance.

In the conventional box, the material for making the shell body is one or more materials selected from the group of Polypropylene (PP), Acrylonitrile Butadiene Styrene (ABS), Acrylonitrile Butadiene Styrene plastic + Polycarbonate (ABS+PC), 100% Polycarbonate (PC) and an aluminum magnesium alloy, wherein PP, ABS, ABS+PC, and PC are resins or plastic materials, and the aluminum magnesium alloy is a metal material. In the conventional box structure, the shell body is mostly made of various kinds of resins such as PP, ABS, ABS+PC or PC and scarcely made of the aluminum magnesium alloy. Since PP, ABS, ABS+PC, and PC are plastic materials, therefore plastic injection molding is usually used for the manufacture (and plastic vacuum molding is used in some cases). For the plastic injection molding, it is necessary to develop a precision mold for the plastic molding, and then mount the mold on a plastic injection molding machine and heat the plastic material to a liquid/fluid state in the plastic injection molding machine, and finally apply a high pressure to push the liquid/fluid plastic to flow through a passage of the mold to a molding position in order to form the expected shell body.

The shell body inside the box structure made of a resin material has been used for a long time as a material of the shell body. However, researches in recent years have found that plastic products made of the resin materials are likely to release toxins and cause serious pollution to the environment. After the plastic products are damaged or destroyed, they are difficult to recycle and reuse, or difficult to recycle and decompose, and the cost of recycling and processing is huge. As a result, it brings up an industrial pollution issue. Due to the large quantity of various plastic products, which have caused serious damage to the global environmental protection for years, the plastic products made of resin materials have been criticized. In addition, it is necessary to develop a high-pressure and heat resistant precision mold to form the shell body and use a large plastic injection molding machine for the manufacture (since the shell body of the box structure has a large volume), and the aforementioned factors increase the manufacturing cost of the box product, so that the selling price of this box product remains very high. In addition, when the plastic injection molding technique is used for manufacturing the shell body of the box structure, the plastic injection capacity and the cooling change rate after molding are limited. Therefore, the thickness of the shell body of the whole box structure must be the same and cannot be increased too much. As a result, the strength of the top and bottom walls of the plastic box structure cannot be improved. In case of receiving impacts or dropping the box accidentally (especially when a suitcase is dropped while checking in and boarding), the box structure will be broken or damaged. Even if the box structure is not broken, the robustness of the box structure will decrease gradually due to the impact. If the thickness (or strength) of the bottom wall of the plastic box cannot be increased, the attachment of the rollers onto the bottom of the box structure will be unstable, and the bottom wall will collapse when the load reaches a limit, and thus producing a deviation of the rollers and a failure after a long time of use. When the thickness (or strength) of the top wall of the plastic box cannot be increased, the handle receives a pulling force every time when pulling up the handle, so that after a long time of use, the junction of the handle and the top wall may often be weakened or even broken by the pulling force. Therefore, the rollers installed to the bottom of the conventional plastic boxes of this sort may fail or the top of these boxes may be broken at the junction of the top easily, since the thickness of the top and bottom walls of the conventional plastic boxes is too thin (because the thickness cannot be increased).

### SUMMARY OF THE INVENTION

In view of the aforementioned drawbacks of the conventional box structure with the shell body made of a resin material, the inventor of the present invention conducted extensive researches and experiments in hope of providing a box product that is made of an eco-friendly material and can be recycled and reused easily, and finally developed and provided a box structure of this invention.

Therefore, it is a primary objective of this invention to provide a box structure capable of lowering the manufacturing cost and improving the robustness of a box.

Another objective of this invention is to provide a box structure that uses an eco-friendly material for the manufacture and puts in great efforts into environmental protection.

To achieve the above-mentioned objective, the present invention relates to a box structure, formed by combining a left shell and a right shell, the left shell and the right shell being manufactured and molded separately, and then combined into a box having an accommodation space inside, and the left shell being divided into a left top wall, a left sidewall and a left bottom wall which are continuously extended and molded; the right shell being divided into a right top wall, a right sidewall and a right bottom wall which are continuously extended and molded; and the material used for manufacture being one selected from the group consisting of a (polyethyleneterephthalate (PET) fiber and a PET fiber added with a polypropylene (PP) fiber, and the selected fiber being stirred, piled up, and manufactured into a non-woven fabric layer block; and then being processed by baking and cold molding to form the left shell and right shell; characterized in that the left and right top walls, and the left and right bottom walls have a weight per unit area of 1200~2000g/m² after molding; the left and right sidewalls have a weight per unit area of 600~1200g/m².

According to the above-mentioned box structure, the left top wall and the right top wall, and the left bottom wall and the right bottom wall have a density greater than that of the left sidewall and the right sidewall after molding.

According to the above-mentioned box structure, the non-woven fabric layer block has a film selectively pasted onto an outer surface thereof.

According to the above-mentioned box structure, the film is a polyethylene film having a thickness of 0.009mm~0.1 mm.

### BRIEF DESCRIPTION OF THE DRAWINGS

FIG. 1 is a perspective view of a first embodiment of the present invention;
FIG. 2 is a longitudinal section view of the first embodiment of the present invention;
FIG. 3 is a perspective view of a second embodiment of the present invention;
FIG. 4 is a longitudinal section view of the second embodiment of the present invention; and
FIG. 5 is a schematic block diagram of a manufacturing process of an embodiment of the present invention.

### REFERENCE NUMBERALS IN DRAWING FIGURES

- 1: Suitcase
- 10: Left shell
- 11: Left top wall
- 12: Left sidewall
- 13: Left bottom wall
- 20: Right shell
- 21: Right top wall
- 22: Right sidewall
- 23: Right bottom wall

### DETAILED DESCRIPTION OF THE PREFERRED EMBODIMENTS

The objectives, technical measures and effects of the present invention will become clearer in light of the following detailed description of an illustrative embodiment of this invention described in connection with the drawings.

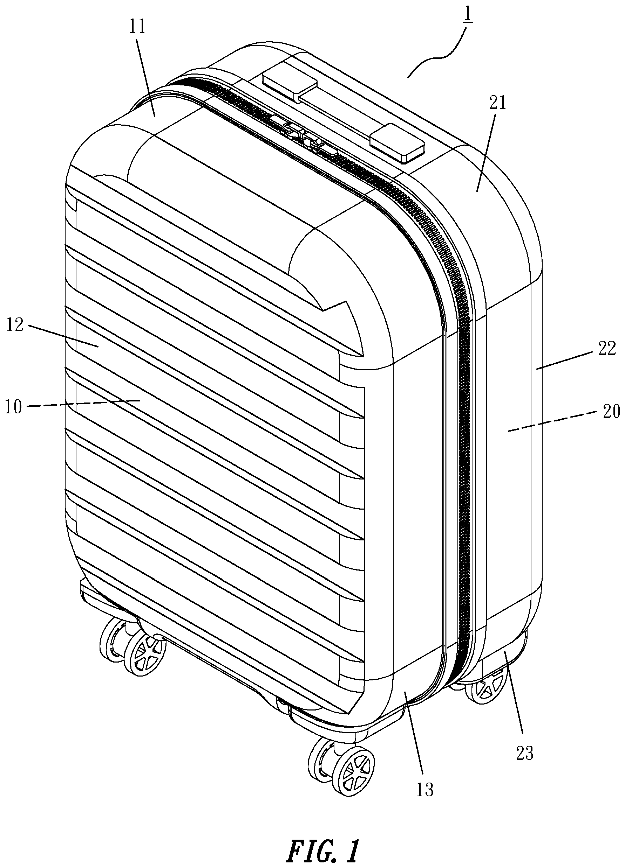

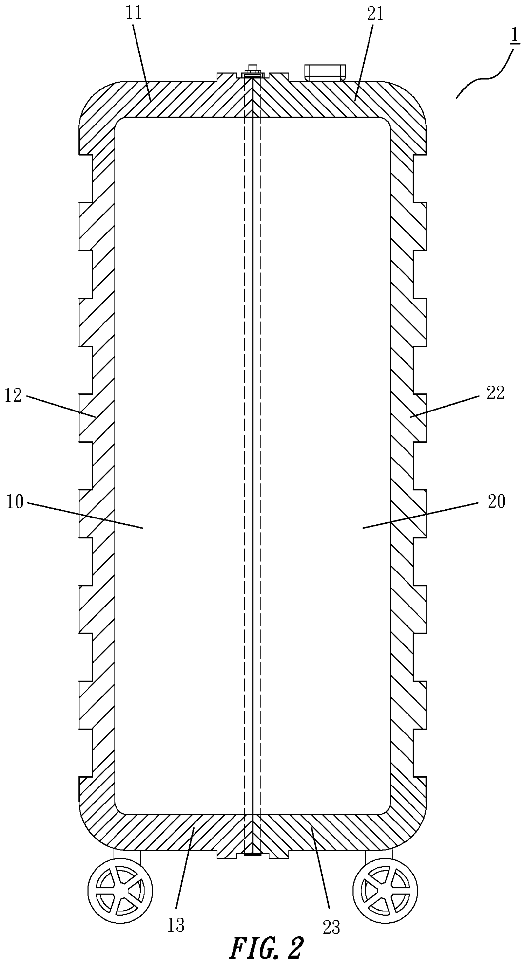

This invention discloses a box structure such as a suitcase which is used as an example to illustrate the invention. With reference to FIGS. 1 and 2 for the box structure (which is a suitcase) in accordance with the first embodiment of the invention, the suitcase 1 is composed of a left shell 10 and a right shell 20 engaged and combined with each other, wherein the left shell 10 and the right shell 20 are manufactured and formed separately, and then combined into a box with an accommodation space inside. The left shell 10 is divided into different parts including a left top wall 11, a left sidewall 12 and a left bottom wall 13, and the left top wall 11, left sidewall 12 and left bottom wall 13 are continuously extended and formed. Similarly, the right shell 20 is continuously extended and formed and it is also divided into different parts including a right top wall 21, a right sidewall 22 and a right bottom wall 23; and the left shell 10 and the right shell 20 are manufactured and formed by a non-woven fabric manufacture technique.

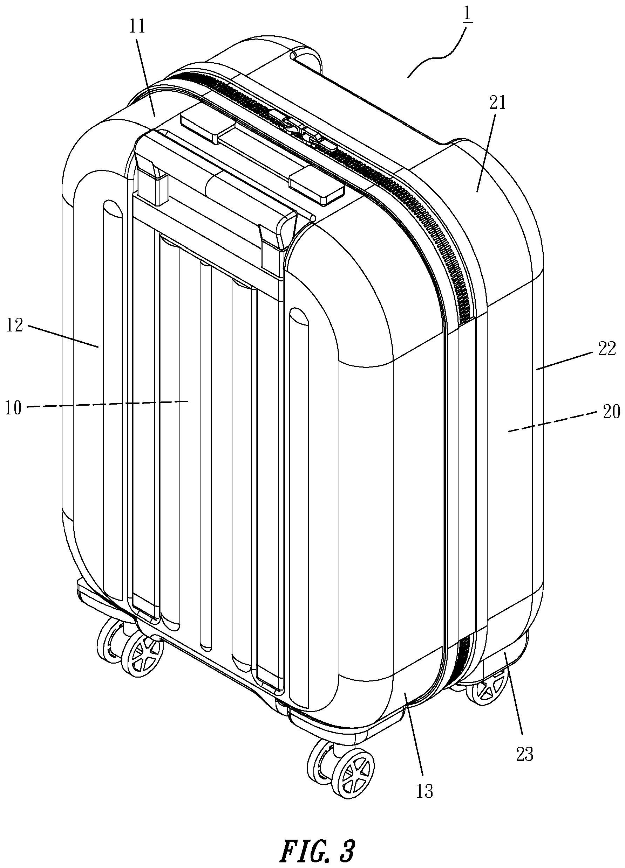

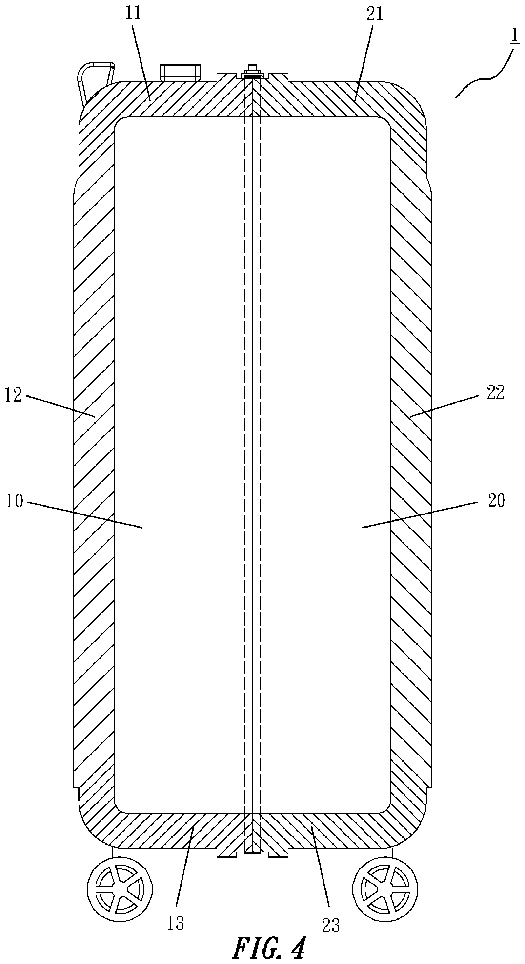

With reference to FIGS. 3 and 4 for a box in accordance with the second embodiment of the present invention, the box is also a suitcase 1 as shown in FIGS. 3 and 4, and the suitcase 1 further includes a pull rod, and the suitcase 1 of the second embodiment is also formed by a left shell 10 and a right shell 20 engaged and combined with each other, and the left shell 10 and the right shell 20 are manufactured and formed separately, and then engaged and combined into a box with an accommodation space inside. The left shell 10 can be divided into different parts including a left top wall 11, a left sidewall 12 and a left bottom wall 13, and the left top wall 11, left sidewall 12 and left bottom wall 13 are continuously extended and formed. Similarly, the right shell 20 is continuously extended and formed, and the right shell 20 is divided into different parts including a right top wall 21, a right sidewall 22 and a right bottom wall 23. The left shell 10 and the right shell 20 are manufactured and formed by a non-woven fabric manufacture technique.

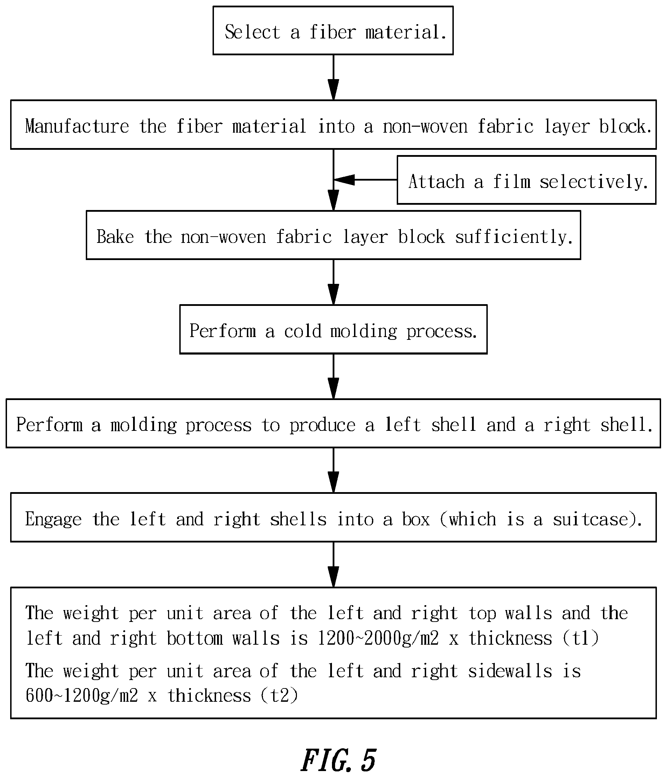

With reference to FIG. 5, in order to achieve a light and robust box structure, the present invention selects a fiber material such as polyethyleneterephthalate (PET) or PET added with polypropylene, and stirs and piles up the selected material to produce a non-woven fabric layer block by a non-woven fabric manufacture technique. During the manufacturing process, the left and right top walls 11, 21 and the left and right bottom walls 13, 23 are added with the non-woven fabric layer block to increase the total thickness; and then a film is selectively attached onto an outer surface of the non-woven fabric layer block, and the film can be a polyethylene film with a thickness of 0.009mm~0.1 mm. The term "a film ... selectively attached onto ...." used here refers to an option to attach or not to attach the film. If the film is attached, the whole structure of the film attached with the non-woven fabric layer block is still called the "non-woven fabric layer block". The non-woven fabric layer block (regardless of having or not having the attached film) is put into an oven and baked sufficiently until the non-woven fabric layer block is softened, wherein a flat press type baking method is preferred. After the non-woven fabric layer block has been baked sufficiently, it is put into a mold and processed by cold molding to produce the left shell 10 and the right shell 20 in a desired shape. Finally, the left shell 10 and the right shell 20 so formed are assembled into a box of the suitcase 1.

When the selected fiber material is stirred and piled up, the material is in a fluffy state, so that the weight per unit area is relatively the smallest; the total height (or total thickness) is relatively higher; and the density is relatively the smallest. When a non-woven fabric manufacture technique is used to produce the non-woven fabric layer block, the fibers are tight and close to one another, and thus having the effects of increasing the weight per unit area, decreasing the thickness (or height), and increasing the density, and the parts to be formed into the left and right top walls 11, 21 and the left and right bottom walls 13, 23 are added with the fibers to increase the thickness, so as to provide a greater weight per unit area. Finally, the baking and cold molding processes are carried out for molding. Now, the fibers are in a fused state, so that the weight per unit area is increased, the thickness (or height) is decreased, and the density is increased. In addition, even if the parts which are already formed into the left and right top walls 11, 21 and the left and right bottom walls 13, 23 are pressed to have the same thickness, the box structure still has a high density. In other words, the parts formed into the left and right top walls 11, 21 and the left and right bottom walls 13, 23 have better robustness.

In order to increase the robustness of the suitcase 1 of the present invention, the baked non-woven fabric layer block is put into the mold for the cold molding process. It is necessary to adjust the molding time and pressure of the mold, and the thickness and density of the left shell 10 and the right shell 20 so formed can be adjusted as needed. For example, the suitcase 1 may drop during use, and the impact is generally situated at the corners of the left and right top walls 11, 21 and the left and right bottom walls 13, 23, so that the structural design needs to have a relatively larger density for the left and right top walls 11, 21 and the left and right bottom walls 13, 23. For example, the formed box structure has a weight per unit area of 1200~2000g/m², a thickness t₁ which are converted into a density of 1200~2000g/m³. The density of the parts of the left and right sidewalls 12, 22 is relatively smaller. For example, the formed box structure has a weight per unit area of 600~1200g/m², and a thickness t₂, which are converted into a density of 600~1200g/m³. After such a distinction, it is obvious that the left and right top walls 11, 21 and the left and right bottom walls 13, 23 have relatively better robustness, which can resist larger impact. Of course, when the density of the left and right top walls 11, 21 and the left and right bottom walls 13, 23 is greater than that of the left and right sidewalls 12, 22, the left and right top walls 11, 21 and the left and right bottom walls 13, 23 also selectively increase their thickness (such that t₁≧t₂) to provide better robustness, but this option is not absolutely necessary.

Compared with the conventional box made of the resin material and manufactured by the plastic injection molding, the present invention obviously has the following advantageous effects:
1. Since the box structure of the present invention is made of a fiber material and processed with the non-woven fabric manufacture technique and the cold molding manufacture technique, the density and thickness of the box so formed can be adjusted. Unlike the conventional box made of a resin material and manufactured by plastic injection molding, whose thickness and density are limited and unchangeable.
2. Since certain parts of the box structure of the present invention are thickened (for example, t₁≧, so that the robustness of the box structure can be adjusted and increased to reduce the possibility of being broken or damaged easily by impacts.
3. The box structure of the present invention can increase its weight per unit area or thickness for certain parts of the structure, so that these parts of the box structure can have better strength and impact resistance.
4. Since the box structure of the present invention is made of the fiber material and processed by the non-woven fabric manufacture technique and the cold molding manufacture technique, therefore after the box structure is formed, the wall body is actually a body having fibers intertwined with each other and formed by the fusion, baking, and pressing processes. As a result, the wall body can be relatively more tightened to provide a better impact resistance.
5. After the box structure of the present invention is processed and formed by the non-woven fabric manufacture technique and the cold molding manufacture technique, the wall body is in a watertight state. With the film attached onto the box structure, the box structure provides a better waterproof effect and a more tightened wall body.

In summation of the description above, the box structure made of the fiber material and manufactured into the non-woven fabric layer block, and then the non-woven fabric layer block is processed sufficiently by the baking and cold molding manufacture techniques to produce the left and right shells with a density of 600~2000Kg/m³. Especially, the density of the top and bottom walls is greater than the density of the sidewalls, and these walls are assembled into a box structure (in form of a suitcase). Since the box structure has good carrying capacity and robustness, therefore its service life is longer than that of the conventional box structure. Even if the box structure of this invention has been used for a long time or it is damaged and discarded, the box structure can be recycled to produce fiber materials which can be reused for manufacturing new products.

Therefore, the box structure of the present invention is novel and can really achieve the expected creative purpose. Apparently, the invention complies with patent application requirements, and is thus duly filed for patent application.

## Claims

1. A box structure, formed by combining a left shell (10) and a right shell (20), the left shell (10) and the right shell (20) being manufactured and molded separately, and then combined into a box having an accommodation space inside, and the left shell (10) being divided into a left top wall (11), a left sidewall (12) and a left bottom wall (13) which are continuously extended and molded; the right shell (20) being divided into a right top wall (21), a right sidewall (22) and a right bottom wall (23) which are continuously extended and molded; and the material used for manufacture being one selected from the group consisting of a (polyethyleneterephthalate (PET) fiber and a PET fiber added with a polypropylene (PP) fiber, and the selected fiber being stirred, piled up, and manufactured into a non-woven fabric layer block; and then being processed by baking and cold molding to form the left shell (10) and right shell (20); **characterized in that** the left (11) and right (21) top walls, and the left (13) and right (23) bottom walls have a weight per unit area of 1200~2000g/m² after molding; the left (12) and right (22) sidewalls have a weight per unit area of 600~1200g/m².

2. The box structure of claim 1, wherein the left top wall (11) and the right top wall (21), and the left bottom wall (13) and the right bottom wall (23) have a density greater than that of the left sidewall (12) and the right sidewall (22) after molding.

3. The box structure of claim 1, wherein the non-woven fabric layer block has a film selectively pasted onto an outer surface thereof.

4. The box structure of claim 3, wherein the film is a polyethylene film having a thickness of 0.009mm~0.1 mm.
